# EUROPÄISCHE PATENTSCHRIFT

(11) **EP 3 682 122 B1**
(45) Veröffentlichungstag und Bekanntmachung des Hinweises auf die Patenterteilung: **20.01.2021**
(21) Anmeldenummer: 18795982.0
(22) Anmeldetag: 26.10.2018
(51) Int. Cl.: F16B 5/02, F16F 1/02

(54) **BEFESTIGUNGSVORRICHTUNG FÜR EIN ABSCHIRMTEIL UND ABSCHIRMTEIL AUFWEISEND DIE BEFESTIGUNGSVORRICHTUNG**
FASTENING DEVICE FOR A SHIELDING PART, AND SHIELDING PART COMPRISING THE FASTENING DEVICE
DISPOSITIF DE FIXATION D'UN ÉLÉMENT DE PROTECTION ET ÉLÉMENT DE PROTECTION PRÉSENTANT LEDIT DISPOSITIF DE FIXATION

(30) Priorität: 14.12.2017 DE 102017130001
(43) Veröffentlichungstag der Anmeldung: 22.07.2020
(73) Patentinhaber: ElringKlinger AG, 72581 Dettingen/Erms (DE)
(72) Erfinder: HEISELBETZ, Gerald, 90579 Langenzenn (DE)
(74) Vertreter: Oberdorfer, Jürgen
(86) Internationale Anmeldenummer: PCT/EP2018/079409
(87) Internationale Veröffentlichungsnummer: WO 2019/115076

(56) Entgegenhaltungen:
- DE-A1-102016 106 152
- DE-A1-102016 106 153
- DE-U1-202016 102 795
- US-A1- 2005 028 963
- US-A1- 2015 345 538

## Beschreibung

Die Erfindung betrifft eine Befestigungsvorrichtung für ein Abschirmteil nach dem Oberbegriff des Anspruchs 1 und ein Abschirmteil aufweisend diese Befestigungsvorrichtung.

Aus der DE 10 2016 106 153 A1 ist eine gattungsgemäße Befestigungsvorrichtung für ein Abschirmteil bekannt.

Eine solche Befestigungsvorrichtung hat sich bewährt. Jedoch besteht weiterhin das Bedürfnis, eine kostengünstige und mit wenigen Teilen herstellbare Befestigungsvorrichtung anzugeben, welche insbesondere unempfindlich gegen Verschmutzung ist und einfach montierbar ist. Des Weiteren soll eine Alternativlösung angegeben werden, welche die Verwendung eines Drahtgestricks vermeidet.

Diese Aufgaben werden mit einer Befestigungsvorrichtung mit den Merkmalen des Anspruchs 1 gelöst. Vorteilhafte Ausführungsformen sind in den abhängigen Ansprüchen angegeben. Weiterhin wird die Aufgabe durch ein Abschirmteil aufweisend die Befestigungsvorrichtung gelöst (Anspruch 14).

Eine erfindungsgemäße Befestigungsvorrichtung eignet sich insbesondere zum Befestigen eines Abschirmteils an einem Befestigungspartnerteil und weist auf:
- eine Hülse mit einer Durchgangsöffnung für ein Befestigungsmittel;
- zumindest zwei Überbrückungselemente, welche mit in einer Radialrichtung R äußeren Bereichen zur mittelbaren oder unmittelbaren Anlage an gegenüberliegenden Außenseiten des Abschirmteils eingerichtet und ausgebildet sind und mit in der Radialrichtung R inneren Bereichen an der Hülse befestigt sind;
- wobei in einer Axialrichtung A zwischen den Überbrückungselementen und in Radialrichtung R außerhalb der Hülse ein Dämpfungselement angeordnet ist.

Sie ist weiterhin dadurch gekennzeichnet, dass
- das Dämpfungselement als Federelement ausgebildet ist und mindestens einen Federarm aufweist, der in der Radialrichtung R federnd nachgiebig ausgebildet ist und zum abstützenden Zusammenwirken mit einem Lochrand eines Loches des Abschirmteils eingerichtet und ausgebildet ist.

Mit einer solchen Befestigungsvorrichtung ist es möglich, bezüglich eines Lochrandes eines Abschirmteils eine federnd abgestützte Befestigungsvorrichtung zu kreieren, so dass harte Schläge der Hülse gegen den Lochrand beispielsweise bei Vibrationsbelastung ausbleiben. Des Weiteren ist das relativ teuer herzustellende Drahtgeflecht, wie es im Stand der Technik benutzt wird, vermieden. Des Weiteren ist durch die erfindungsgemäße Ausgestaltung der Befestigungsvorrichtung eine Schmutzansammlung, wie sie in den Hohlräumen eines Drahtgeflechts über die Lebensdauer der Befestigungsvorrichtung möglich ist, bei der Erfindung stark vermindert, ja sogar vermieden.

In einer bevorzugten Ausführungsform der erfindungsgemäßen Befestigungsvorrichtung ist das Dämpfungselement als Blechstanzbiegeteil mit in einer Umfangsrichtung U verteilt angeordneten Federarmen ausgebildet.

Mit einer derartigen Ausbildung kann das Federelement zum Abstützen der Befestigungsvorrichtung bezüglich eines Lochrandes im Abschirmteil in besonders kostengünstiger und einfacher Art und Weise als ein Teil hergestellt werden.

Des Weiteren gewährleistet ein derart ausgestaltetes Dämpfungselement eine federnde Abstützung der Befestigungsvorrichtung in allen Radialrichtungen R gegenüber dem Lochrand des Abschirmteils.

Eine weitere bevorzugte Ausführungsform ist dadurch gekennzeichnet, dass das Dämpfungselement spielfrei, insbesondere radial vorgespannt auf der Hülse sitzt.

Dies trägt insbesondere zur geräuscharmen Ausgestaltung der Befestigungsvorrichtung bei, da kein Klappern zwischen dem Dämpfungselement und der Hülse aufgrund von Spiel zwischen diesen Bauteilen oder auch nach längerer Betriebsdauer auftreten kann.

In einer weiteren Ausgestaltung ist die Befestigungsvorrichtung dadurch gekennzeichnet, dass das Dämpfungselement in Radialrichtung R bezüglich der Hülse starr oder federnd nachgiebig festgelegt ist.

Insbesondere mit einer federnd nachgiebigen Festlegung des Dämpfungselements bezüglich der Hülse kann die federnde Dämpfung zusätzlich zu den Federarmen in den radial äußeren Bereichen genauer eingestellt werden und somit eine federnde Abstützung der Hülse (Federcharakteristik) gegenüber dem Abschirmteil in engeren Grenzen vorbestimmt werden.

Eine weitere besondere Ausführungsform der Befestigungsvorrichtung ist dadurch gekennzeichnet, dass das Dämpfungselement als offener Federring ausgebildet ist, z. B. als geschlitzter Federring ausgebildet ist.

Mit einer derartigen Ausgestaltung des Dämpfungselements als offener Federring kann das Dämpfungselement in einfacher Art und Weise, z. B. nach Art eines Kolbenrings, um die Hülse vormontiert werden und als vormontierte Einheit dann weiter verarbeitet werden.

Das Dämpfungselement kann als offener Federring auf einer zylindrischen Außenseite der Hülse sitzen oder gegebenenfalls in einer Nut, die in die zylindrische Außenseite der Hülse eingelassen ist, sitzen. Ebenso kann er sich an einem Kragen oder ähnlichem Vorsprung der Hülse abstützen.

Über geeignete Fasen oder dergleichen Anschrägungen kann beispielsweise in einfacher Art und Weise auch eine Montage des Dämpfungselements bezüglich der Hülse in einer axialen Montagerichtung auf einander zu einfach bewerkstelligt werden, da ein offener Federring entsprechend an den Phasenflächen aufgeweitet werden kann und dann an der Außenumfangsfläche federnd vorgespannt anliegt.

In einer weiteren bevorzugten Ausführungsform ist die Befestigungsvorrichtung dadurch gekennzeichnet, dass das Dämpfungselement mindestens zwei Rastnasen besitzt, welche dazu eingerichtet und ausgebildet sind, nach der Montage im Abschirmteil in Montagerichtung M hinter einer Lochkante zu verhaken.

Bei dieser Ausgestaltung weist das Dämpfungselement zusätzlich zu den Federarmen Rastnasen auf, die ebenfalls in besonders bevorzugter Art und Weise nach Art von Ausstanzungen und gegebenenfalls Biegungen des Rohbleches für das Dämpfungselement gebildet sind, auf. Diese Rastnasen sind derart eingerichtet und ausgebildet, dass sie hinter einer Lochkante der Ausnehmung bzw. des Befestigungsloches im Abschirmteil verhaken können, so dass ein teilmontierter Zustand der Befestigungsvorrichtung in Axialrichtung in die Ausnehmung des Abschirmteils eingeclipst werden kann und über die Rastnasen eine formschlüssige Vorfixierung bezüglich der Ausnehmung erhält, bis ein zweites Überbrückungselement bezüglich der Hülse fest montiert ist und somit ein endgültiger Montagezustand erreicht ist. Die Rastnasen dienen also vordringlich zur Zwischenfixierung eines teilmontierten Zustandes der Befestigungsvorrichtung und werden im endmontierten Zustand nicht mehr unbedingt benötigt.

In einer weiteren Ausführungsform der erfindungsgemäßen Befestigungsvorrichtung sind die Rastnasen in Umfangsrichtung U jeweils in einem Zwischenraum zwischen Federarmen angeordnet.

Eine derartige Anordnung bietet sich an, weil zwischen den Federarmen entsprechende Lücken vorhanden sind. Es müssen natürlich nicht unbedingt in jedem Zwischenraum zwischen zwei Federarmen Rastnasen vorhanden sein. Es können beispielsweise auch lediglich zwei, besser drei oder mehrere Rastnasen über den Umfang verteilt vorhanden sein.

In einer weiteren bevorzugten Ausführungsform der Befestigungsvorrichtung sind die Federarme auf einem Federarmträgerring angeordnet und die Rastnasen sind auf einem separaten Rastnasenträgerring angeordnet.

Eine derartige Konstruktion erhöht zwar die Anzahl der insgesamt notwendigen Bauteile (ein Ring aufweisend Federarme und ein Ring aufweisend Rastnasen), ermöglicht jedoch eine etwas einfachere Fertigung der einzelnen Bauteile.

Hier gilt es eine entsprechende Kosten- und Aufwandsabwägung vorzunehmen, ob ein einteiliges Dämpfungselement, welches die Federarme und die Rastnasen einstückig aufweist, vorteilhafter ist oder gegebenenfalls die Ausbildung als ein Dämpfungselement mit Federarmen und als ein Rastelement mit Rastnasenträgerring und Rastnasen.

In einer weiteren bevorzugten Ausführungsform der Befestigungsvorrichtung sind Federarme vorhanden, die vom Federarmträger abgehen und zur radial inneren Abstützung des Federelements relativ zur Hülse vorgesehen sind.

Derartige Federarme, die zur federnden Abstützung in Radialrichtung R nach innen bezüglich der Hülse vorgesehen sind, können insbesondere eine andere Federhärte oder Elastizität haben als diejenigen Federarme, die auf der radial äußeren Seite angeordnet sind und zur federnden Abstützung der Befestigungsvorrichtung am Lochrand des Abschirmteils dienen.

Mit dieser Ausgestaltung ist es möglich, eine feine Abstimmung der federnden Abstützung (Federrate der Hülse in Radialrichtung bezüglich des Abschirmteils) einzustellen. Des Weiteren ist das Vorsehen von Federarmen in der Radialrichtung nach innen zur Abstützung des Dämpfungselements gegenüber der Hülse vorteilhaft, dass eine Aufschnapplösung des Dämpfungselements auf der Hülse ohne Weiteres realisiert werden kann, auch wenn das Dämpfungselement als geschlossener, das heißt nicht geschlitzter Ring, ausgebildet ist.

In einer weiteren bevorzugten Ausführungsform ist die Befestigungsvorrichtung dadurch gekennzeichnet, dass der Federträgerring in einer Nut der Hülse sitzt.

In einer solchen Ausführungsform kann wie oben beschrieben der Federträgerring und somit das Dämpfungselement, nach Art eines Kolbenringes bezüglich der Hülse montiert werden.

In einer weiteren bevorzugten Ausführungsform sind bei der Befestigungsvorrichtung die Überbrückungselemente jeweils auf axialen Stirnseiten der Hülse an der Hülse befestigt.

Eine derartige Ausführungsform ermöglicht es, die Hülse als Rohelement einstückig herzustellen und beispielsweise in einem Fertigungsschritt, der eine Betätigungsrichtung lediglich in Axialrichtung A hat, die Überbrückungselemente mit dem Hülsenelement zu verbinden (insbesondere mittels einer Börtelung oder Nutung).

Weiter bevorzugt können die Überbrückungselemente scheibenartige, im Querschnitt napfartige Körper sein, die im zusammengebauten Zustand zusammen mit dem Abschirmteil und der Hülse einen geschlossenen Ringhohlraum bilden, in dem das Federelement, das heißt das Dämpfungselement, angeordnet ist.

Mit dieser Ausführungsform ist dies in einfacher Art und Weise möglich, einen vor Verschmutzung weitgehend geschützten Hohlraum zu bilden, in dem das Dämpfungselement sitzt, so dass auch unter hoher Schmutzbelastung des Abschirmteils eine Schmutzbelastung des Dämpfungselements bzw. ein Schmutzeintrag in den Hohlraum, in dem das Dämpfungselement sitzt, stark vermindert bzw. ausgeschlossen ist.

Hierdurch sind die Dämpfungseigenschaften bzw. die dampfenden und/oder die federnden Eigenschaften des Dämpfungselements über die Betriebsdauer besser sichergestellt.

In einer weiteren Ausführungsform ist die erfindungsgemäße Befestigungsvorrichtung dadurch gekennzeichnet, dass die Hülse axial stirnseitig jeweils einen Umlagekragen besitzt, mit dem die Überbrückungselemente mit einer Betätigungsrichtung B eines Börtelwerkzeuges/Nietwerkzeuges in Axialrichtung A ausgerichtet ist in einem Arbeitsgangs befestigbar sind.

Diese Maßnahmen tragen zu einer einfachen Montage der erfindungsgemäßen Befestigungsvorrichtung an einem Abschirmteil bei, wobei die gesamte Montage/Befestigung der Befestigungsvorrichtung am Abschirmteil durch ein Fügeverfahren, welches in Axialrichtung A stattfindet, erledigt werden kann.

Ein Abschirmteil aufweisend mindestens eine Befestigungsvorrichtung gemäß der Erfindung löst die Aufgaben der Erfindung betreffend das Abschirmteil.

Die erfindungsgemäße Befestigungsvorrichtung ist als kompakte mehrteilige Baugruppe ausgeführt, welche von beiden Seiten in eine Aufnahmeöffnung des Abschirmteils gefügt wird. Eine Einheit der Baugruppe wird als fertig vormontierte und einrastbare Komponente der Montage zugeführt. Hierfür kann ein weiter unten beschriebenes Rastelement oder mindestens eine Rastnase einen wertvollen Beitrag leisten. Bei der Montage der Befestigungsvorrichtung muss somit keine bestimmte Reihenfolge und Einbaulage von mehreren verschiedenen Einzelteilen relativ zum Abschirmteil beachtet werden. Die Befestigungsvorrichtung ist durch seine auch in Axialrichtung A federnde Auslegung auch nicht auf eine bestimmte Blechstärke des Abschirmteils festgelegt und kann somit für alle gängigen im Einsatz befindlichen Blechdicken, die für Abstandteile verwendet werden, eingesetzt werden. Die Generierung von Varianten wird somit vermieden, da eine Vielzahl von Überbrückungselementen zur Ausbildung unterschiedlicher Befestigungsvorrichtungen herangezogen werden kann.

Auflageflächen von federnden Teilen der Befestigungsvorrichtung auf entsprechenden Außenseiten des Abschirmteils sind so ausgelegt, dass sie nur mit einer minimalen Fläche in direkten Kontakt mit den oftmals mit einer Korrosionsbeschichtung versehenen Außenseiten des Abschirmteils gelangen, wodurch die Oberfläche durch Reibung nicht beschädigt wird. Zusätzliche Gleitscheiben, die im Stand der Technik oftmals eingesetzt werden, sind bei der Erfindung nicht erforderlich, da deren Funktion durch die äußeren federnden Teile der Überbrückungselemente übernommen wird. Die axiale Dämpfung der Befestigungsvorrichtung erfolgt durch die federnde Wirkung der aufliegenden Bauteile, das heißt der Überbrückungselemente, insbesondere deren radial äußeren Bereiche auf den Außenseiten des Abschirmteils. Die radiale Dämpfung der Befestigungsvorrichtung erfolgt durch das im Inneren der Befestigungsvorrichtung eingesetzte Federelement, welches als Radialfeder wirkt, die ein Anschlagen der Hülse am Rand der Ausnehmung des Abschirmteils und somit eine entsprechende unerwünschte Geräuschbildung verhindert.

Als besondere Vorteile der Erfindung seien erwähnt:
- Eine Komponente (Unterbaugruppe) der Befestigungsvorrichtung kann als vormontierte Einheit der Endmontage, das heißt der Montage der Befestigungsvorrichtung im Abschirmteil zugeführt werden.
- Die vormontierte Einheit kann in einer bevorzugten Ausführungsform in der Einbaubohrung des Hitzeschildes einrasten und ist somit vorfixierbar.

Die zweite Komponente (hier: zweites Übertragungselement), die zusammen mit der ersten Komponente (Unterbaugruppe) die gesamte Befestigungsvorrichtung bilden kann, ist lediglich ein einzelnes Teil, was das Handling und die Zuführung der zweiten Komponente zur Montagestelle erleichtert.
- Bei der Montage ist nur ein geringer Fügeaufwand nötig und es muss keine Montagereihenfolge oder eine bestimmte Einbauposition von Einzelteilen beachtet werden, da zur Endmontage lediglich zwei Komponenten vorgesehen sind, die in nur einer sinnvollen Stellung miteinander montiert werden können.

Die Montage der Befestigungsvorrichtung am Abschirmteil erfolgt von beiden Seiten. Eine einzige Montagerichtung ist ausreichend. Im Rahmen der Erfindung finden nur translatorische Fügeschritte in einer Axialrichtung A statt.
- Der Einsatz der Befestigungsvorrichtung ist durch die federnden Bauteile (die federnden Überbrückungselemente) unabhängig von den verwendeten Blechstärken des Abschirmteils. Somit ist keine Variantenkonstruktion oder eine Bevorratung von unterschiedlichen Varianten erforderlich.
- Die Auflageflächen der Befestigungsvorrichtung sind minimiert, wodurch nur eine geringe Reibung zwischen der Befestigungsvorrichtung und den freien Oberflächen des Abschirmteils entstehen kann. Dies macht es möglich, auf zusätzliche Gleitscheiben zu verzichten.
- Eine gegebenenfalls vorhandene Korrosionsschutzschicht, beispielsweise eine Aluminiumschutzschicht des Abschirmteils wird nicht durch den Kontakt mit einem Drahtgestrick, welche üblicher Weise im Stand der Technik als Dämpfungselement verwendet wird, durch Reibung beschädigt und es kommt somit nicht zur Korrosion.
- Die Erfindung stellt eine geschlossene Bauweise einer Befestigungsvorrichtung dar, das heißt eine Öffnung in einem Abschirmteil zur Aufnahme einer Befestigungsvorrichtung wird durch die Befestigungsvorrichtung in jeder Relativlage dieser relativ zum Abschirmteil vollständig verschloss, so dass keine Öffnungen verbleiben, durch die Wärmestrahlung direkt das Abschirmteil passieren kann.

Der Wärmedurchgang ist somit vermindert.

Die Befestigungsvorrichtung zeichnet sich insgesamt durch eine flache und kompakte Bauweise aus, wobei durch den einfachen Aufbau eine axiale und zusätzlich radiale federnde Dämpfungswirkung der Befestigungsvorrichtung bezüglich des Abschirmteils möglich ist. Die Befestigungsvorrichtung ist radial verschiebbar in der für die Befestigungsvorrichtung gesehene Ausnehmung im Abschirmteil, um thermische Spannungen auszugleichen.
- Ein direkter berührender Kontakt zwischen der Hülse und dem Abschirmteil ist durch die innen liegende Radialfeder, die als Dämpfungselement in Radialrichtung R wirkt, vermieden. Aufgrund von lediglich metallischen Bauteilen ist eine Ausführungsform der erfindungsgemäßen Befestigungsvorrichtung thermisch besonders beständig.

Im Folgenden wird die Erfindung beispielhaft anhand der Zeichnungen näher erläutert. Es zeigen:
- Figur 1a:: eine teilgeschnittene perspektivische Ansicht auf eine erste Ausführungsform der erfindungsgemäßen Befestigungsvorrichtung eingebaut in einem erfindungsgemäßen Abschirmteil;
- Figur 1b:: eine perspektivische Unteransicht der erfindungsgemäßen Befestigungsvorrichtung gemäß Figur 1a in einem teilmontierten Zustand an einem Abschirmteil;
- Figur 1c:: eine teilgeschnittene Querschnittsansicht der Ausführungsform gemäß Figur 1a;
- Figur 1d:: eine Seitenansicht der ersten Ausführungsform der erfindungsgemäßen Befestigungsvorrichtung bzw. des erfindungsgemäßen Abschirmteils;
- Figur 1e:: eine Seitenansicht gemäß Figur 1d einer zweiten Ausführungsform der erfindungsgemäßen Befestigungsvorrichtung bzw. des erfindungsgemäßen Abschirmteils;
- Figur 1f:: eine perspektivische Ansicht der Ausführungsform gemäß Figur 1e in einem verbauten/montierten Zustand mit einem Befestigungsmittel;
- Figur 1g:: eine teilgeschnittene Querschnittsansicht einer dritten Ausführungsform der erfindungsgemäßen Befestigungsvorrichtung bzw. des erfindungsgemäßen Abschirmteils;
- Figur 2a:: eine perspektivische Ansicht auf ein Überbrückungselement gemäß der ersten Ausführungsform der Befestigungsvorrichtung;
- Figur 2b:: eine Hülse und ein Federelement in einem vormontierten Zustand der ersten Ausführungsform der erfindungsgemäßen Befestigungsvorrichtung;
- Figur 2c:: ein teilmontierter Zustand des Überbrückungselements gemäß Figur 2a und des Teilverbundes gemäß Figur 2b;
- Figur 3a:: eine zweite Ausführungsform des Federelements geeignet für eine erfindungsgemäße Befestigungsvorrichtung;
- Figur 3b:: schematisch einen Zwischenmontagezustand in teilgeschnittener Ansicht (perspektivisch) einer Ausführungsform der Befestigungsvorrichtung/des Abschirmteils aufweisend das Federelement gemäß Figur 3a;
- Figur 4a:: einen Rastnasenring zur Verwendung in einer erfindungsgemäßen Befestigungsvorrichtung bzw. einem erfindungsgemäßen Abschirmteil;
- Figur 4b:: den Rastnasenring gemäß Figur 4a kombiniert mit einem Federelement gemäß dem ersten Ausführungsbeispiel der erfindungsgemäßen Befestigungsvorrichtung;
- Figur 4c:: ein teilmontierter Zustand der erfindungsgemäßen Befestigungsvorrichtung aufweisend den Rastnasenring;
- Figur 4d:: einen weiter teilmontierten Zustand in einem Abschirmteil der erfindungsgemäßen Befestigungsvorrichtung gemäß Figur 4c;
- Figur 5a:: eine dritte Ausführungsform des Dämpfungselements der erfindungsgemäßen Befestigungsvorrichtung in einer perspektivischen Ansicht;
- Figur 5b:: eine teilgeschnittene perspektivische Ansicht einer Vormontagestellung einer dritten Ausführungsform der erfindungsgemäßen Befestigungsvorrichtung und
- Figur 5c:: eine teilgeschnittene isometrische Ansicht der dritten Ausführungsform der erfindungsgemäßen Befestigungsvorrichtung eingesetzt in ein Abschirmteil zur Bildung eines erfindungsgemäßen Abschirmteils.

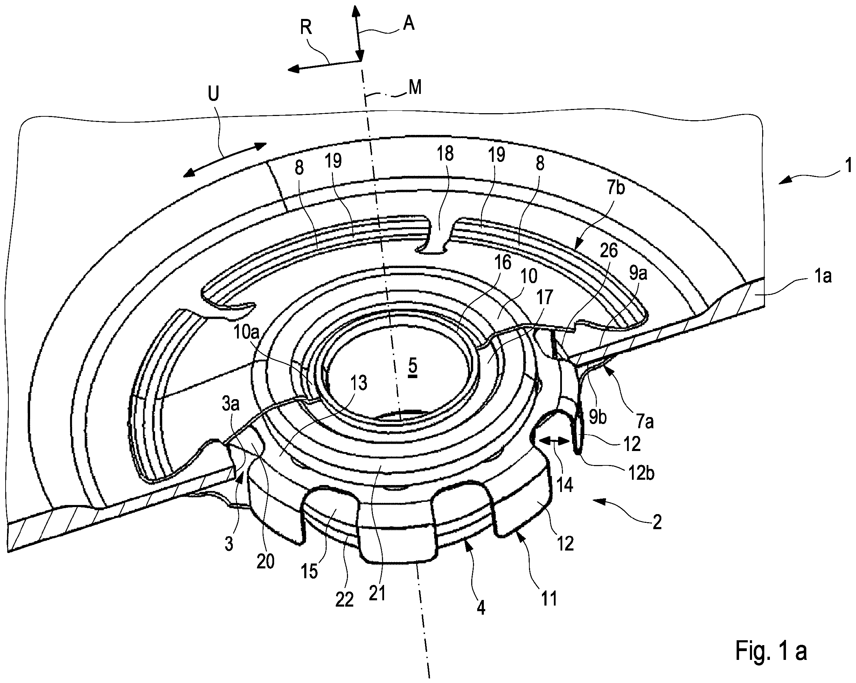

Figur 1a zeigt eine erste Ausführungsform eines erfindungsgemäßen Abschirmteils 1 aufweisend eine erfindungsgemäße Befestigungsvorrichtung 2. Die Befestigungsvorrichtung 2 sitzt in einer Ausnehmung 3 des Abschirmteils 1. Die Ausnehmung 3 besitzt einen Lochrand 3a. Das Abschirmteil 1 ist in üblicher Art und Weise ein- oder mehrlagig aus einem Metall oder einem sonst hitzebeständigen flächigen Bauteil 1a ausgebildet. Das Abschirmteil 1 bzw. dessen flächiges Bauteil 1a ist insbesondere als Wärmeabschirmteil und/oder als Schallabschirmteil ausgebildet.

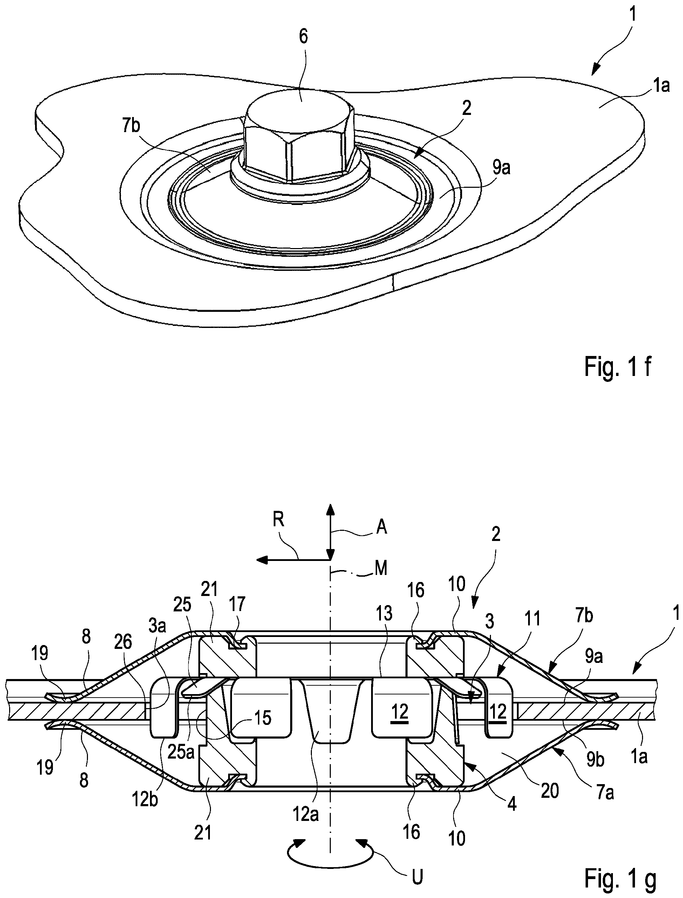

Die erfindungsgemäße Befestigungsvorrichtung 2 besitzt eine Hülse 4, welche eine Durchgangsöffnung 5 besitzt, durch welche ein Befestigungsmittel 6 (vergl. Figur 1f), z. B. eine Schraube, gesteckt werden kann. Das Befestigungsmittel 6 dient dazu, das Abschirmteil 1 zusammen mit der erfindungsgemäßen Befestigungsvorrichtung 2 an einem Befestigungspartnerteil (nicht gezeigt), z. B. in einem Turbolader, einem Abgaskrümmer oder dergleichen heißen Bauteilen oder z. B. an Karosseriebereichen, zu befestigen. Die Befestigungsvorrichtung 2 weist außerdem zumindest zwei Überbrückungselemente 7a, 7b auf.

Für die Zwecke der weiteren Beschreibung wird im Folgenden eine Axialrichtung A, eine Radialrichtung R sowie eine Umfangsrichtung U festgelegt. Die Axialrichtung A ist parallel ausgerichtet zu einer Mittelinie M der Durchgangsöffnung 5. Die Radialrichtung R ist senkrecht zur Mittelinie M ausgerichtet und weist von dieser weg.

Die Umfangsrichtung U ist in Figur 1a beispielhaft mit einem Pfeil 14 dargestellt und läuft um die Mittelachse M rum.

Die Überbrückungselemente 7a, 7b haben in einer Radialrichtung R äußere Bereiche 8, welche dazu eingerichtet und ausgebildet sind, mittelbar oder unmittelbar an gegenüberliegenden Außenseiten 9a, 9b des Abschirmteils 1 bzw. dessen flächigen Bauteils 1a anzuliegen. Mit radial inneren Bereichen 10 sind die Überbrückungselemente 7a, 7b mit der Hülse 4, insbesondere einer Stirnseite der Hülse 4, welche in Axialrichtung A weist, verbunden.

In der Axialrichtung A zwischen den Überbrückungselementen 7a, 7b und in Radialrichtung R außerhalb der Hülse 4 ist ein Dämpfungselement 11 angeordnet. Das Dämpfungselement 11 ist als Federelement 11 ausgebildet und besitzt mindestens einen Federarm 12, insbesondere eine Vielzahl von Federarmen 12, die in Umfangsrichtung U verteilt angeordnet sind. Jeder Federarm 12 ist einstückig mit einem Federarmträgerring 13 verbunden. Außerdem ist jeder Federarm 12 in der Radialrichtung R federnd nachgiebig (Pfeil 14) ausgebildet und zur abstützenden Zusammenwirkung mit dem Lochrand 3a der Ausnehmung 3 des Abschirmteils 1 eingerichtet und ausgebildet.

Insbesondere sitzen alle Federarme 12 einstückig an ein und demselben Federarmträgerring 13, so dass das Dämpfungselement/Federelement 11 als einstückiges Federelement ausgebildet ist. Der Federarmträgerring 13 geht z. B. als ebenes Blechgebilde radial von einer Außenseite 15 der Hülse 4 ab. Jeder Federarm 12 ist über eine etwa rechtwinklige Abbiegung mit dem Federarmträgerring 13 verbunden und erstreckt sich im Wesentlichen in Axialrichtung A. Ein Außendurchmesser des Federelements bzw. des Dämpfungselements 11 ist dabei bevorzugt kleiner oder gleich gewählt als ein Lochdurchmesser der Ausnehmung 3, so dass eine radiale Verschieblichkeit der Befestigungsvorrichtung 2 innerhalb der Ausnehmung 3 des Abschirmteils 1 gewährleistet ist. Erst nach Erreichen einer Verschieblichkeitsgrenze kommen Federarme 12 mit dem Lochrand 3a in Berührung und begrenzen eine weitere Verschieblichkeit der Befestigungsvorrichtung 2 innerhalb der Ausnehmung 3. Dies geschieht aufgrund der Federarme 12 federnd nachgiebig und durch die Eigendämpfung des verwendeten Materials für das Dämpfungselement 11 auch gedämpft, so dass ein geräuschfreies und sanftes Anliegen der Befestigungsvorrichtung 2 am Lochrand 3a der Ausnehmung 3 stattfindet. Hierdurch sind ungewollte Geräuschentwicklungen z.B. aufgrund von Vibrationen, verhindert.

Auch wenn eine Anlage zwischen dem Federelement 11 und dem Lochrand 3a, z. B. aufgrund von Vibrationen oder aufgrund von thermischen Ausdehnungen erfolgt, so ist diese Anlage dennoch nicht starr und kann durch einen erhöhten Kraftaufwand zwischen der Befestigungsvorrichtung 2 und dem Abschirmteil 1 noch in Grenzen unter Überwindung der Federkräfte der Federarme 12 ausgedehnt werden.

Die Dämpfungseigenschaften der gesamten Befestigungsvorrichtung 2 wird neben der materialeigenen Eigendämpfung der Federarme 12 bzw. des Dämpfungselements 11 noch durch die federnde Anlage der radial äußeren Bereiche 8 der Überbrückungselemente 7a, 7b auf den gegenüberliegenden Außenseiten 9a, 9b des Abschirmteils 1 unterstützt. In diesen Bereichen findet ein Reibkontakt zwischen den Überbrückungselementen 7a, 7b und den gegenüberliegenden Außenseiten 9a, 9b des Abschirmteils 1 statt, welches zusätzlich eine Dämpfung einer Relativbewegung zwischen der Befestigungsvorrichtung 2 und dem Abschirmteil 1 in Radialrichtung R bewirkt.

Das Dämpfungselement 11 ist in bevorzugter Art und Weise nach Art eines Stanzbiegeteiles, z. B. aus einem metallischen Blechwerkstoff, hergestellt. Die Hülse 4 ist in bevorzugter Art und Weise einstückig, gegebenenfalls aus Metall und/oder Kunststoff hergestellt. Sofern es die thermischen Einsatzbedingungen erlauben, können die erfindungsgemäße Befestigungsvorrichtung 2als ganzes oder beliebige Einzelteile dieser auch aus geeigneten Kunststoffen ausgebildet sein.

Stirnseitig weist die Hülse 4 Umlagekrägen 16 auf. Radial außerhalb der Umlagekrägen 16 ist eine stirnseitige Ringnut 17 vorgesehen. In der Ringnut 17 kommt jeweils ein korrespondierender Bereich der Überbrückungselemente 7a, 7b zur Anlage. Die Umlagekrägen 16 werden zur Verbindung der Überbrückungselemente mit der Hülse 4 radial nach außen umgelegt und halten so die Überbrückungselemente 7a, 7b auf ihrer jeweiligen Stirnseite der Hülse 4 fest.

Es ist besonders bevorzugt, dass das Dämpfungselement 11 in Radialrichtung R bezüglich der Hülse 4 spielfrei, insbesondere radial vorgespannt auf der Außenseite 15 der Hülse 4 sitzt.

Durch eine spielfreie Lagerung bzw. durch eine federnd vorgespannte Lagerung des Dämpfungselements 11 auf der Außenseite 15 der Hülse 4 ist eine weitere Geräuschreduzierung unter Vibrationsbelastung erreichbar.

Es kann sich auch anbieten, eine Nut (nicht gezeigt), z. B. eine Ringnut auf der Außenseite 15 der Hülse 4 vorzusehen, in die ein Dämpfungselement 11, welches beispielsweise nach Art eines Kolbenringes geschlitzt ausgebildet ist, federnd eingreift. Durch eine derartige Nut kann eine einfache Festlegung des Dämpfungselements 11 in Axialrichtung A bezüglich der Hülse 4 gewährleistet werden.

Die Überbrückungselemente 7a, 7b haben eine scheibenförmige, im Querschnitt napfförmige Raumform und sind beispielsweise aus einem Federstahl oder einem anderen geeigneten flächigen Werkstück gebildet.

Radial von den äußeren Bereichen 8 nach innen können die Überbrückungselemente 7a, 7b Schlitze 18 besitzen. Zwischen zwei derartigen Schlitzen 18, die in Umfangsrichtung U verteilt angeordnet sind, sind Federzungen 19 gebildet. Es ist allerdings auch möglich, die Überbrückungselemente 7a, 7b ohne Schlitze 18 als geschlossene napfartige Elemente auszubilden. Hierdurch entsteht ein geschlossener Hohlraum 20, der von dem Lochrand 3a, von den Überbrückungselementen 7a, 7b und von der Hülse 4 bzw. deren Außenseite 15 begrenzt ist. In diesem geschlossenen Hohlraum 20 eingebettet sitzt das Dämpfungselement 11 gut vor Schmutz und/oder Staub und dergleichen geschützt.

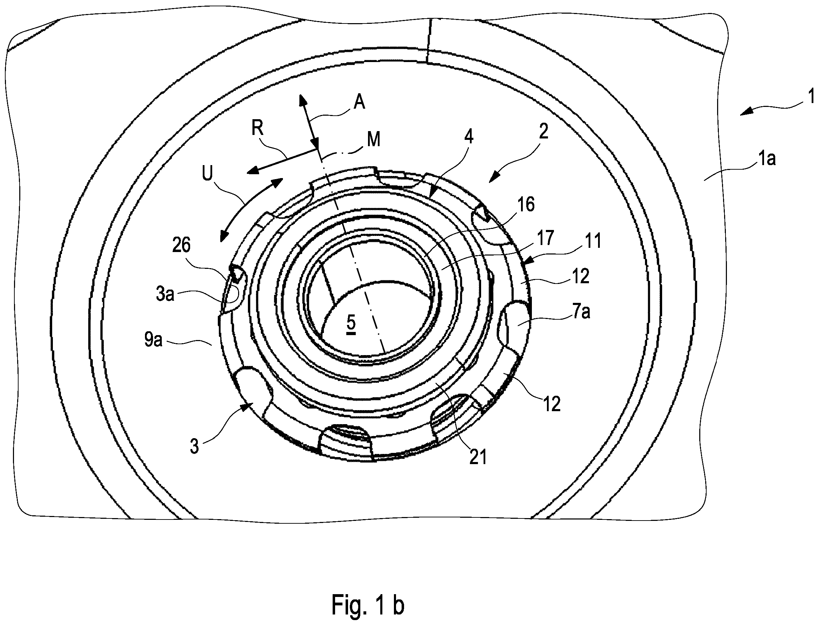

Figur 1b zeigt einen Zwischenmontagezustand einer erfindungsgemäßen Befestigungsvorrichtung 2 in einer Ausnehmung 3 des Abschirmteils 1. Eines der Überbrückungselemente 7a ist stirnseitig mit der Hülse 4 verbunden. Die Hülse 4 ist mit dem Dämpfungselement 11 versehen. Im vorliegenden Fall (Figur 1b) ist der Außendurchmesser gegenüberliegender Federarme 12 derart gewählt, dass dieser sogar etwas größer ist als der Durchmesser der Ausnehmung 3 im Abschirmteil 1, so dass eine federnd vorgespannte Halterung des Verbundes aus einem ersten Überbrückungselement 7a, der Hülse 4 und dem Dämpfungselement 11 in der Ausnehmung 3 stattfindet. Eine derartige Anordnung bewirkt, dass keine freie Verschieblichkeit der Befestigungsvorrichtung 2 innerhalb der Ausnehmung 3 gegeben ist, sondern jede Verschieblichkeit in Radialrichtung bereits gegen eine Federkraft der Federarme 12 erfolgen muss.

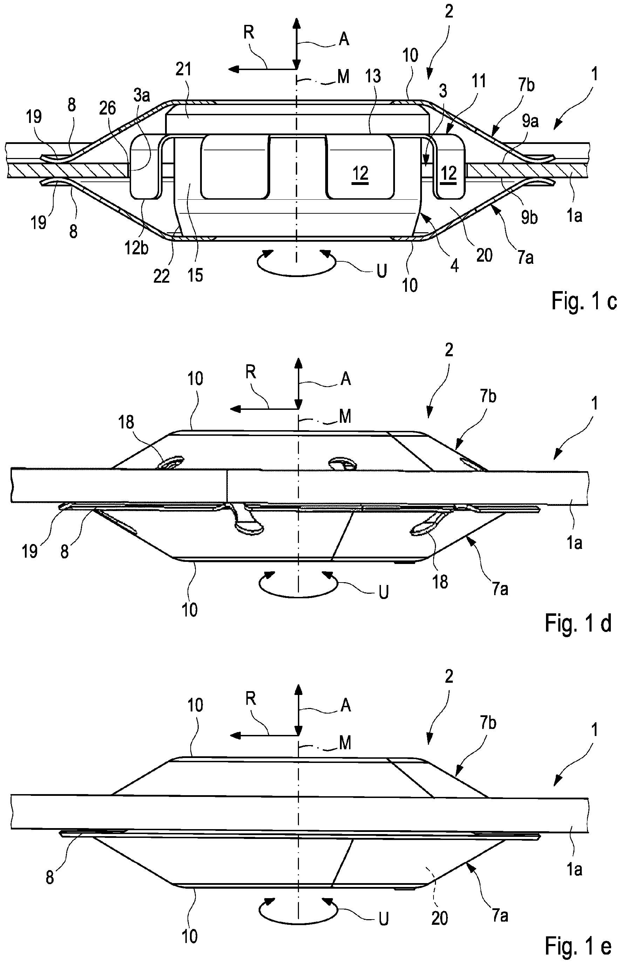

In dem in Figur 1 dargestellten Zwischenmontagezustand muss nunmehr nur noch ein einziges Überbrückungselement 7b (welches in der Figur 1b nicht gezeigt ist) auf die freie Stirnseite der Hülse 4 aufgesetzt und dort vernietet oder verbörtelt oder anderweitig befestigt werden, z. B. in dem der Umlagekragen 16 mit einem geeigneten Umlagewerkzeug, z. B. einem Dorn, radial nach außen umgelegt wird.

Figur 1c zeigt die Ausführungsform gemäß Figur 1a in einer teilgeschnittenen Seitenansicht. Der geschlossene Hohlraum 20, der durch eine nicht geschlitzte Variante der Überbrückungselemente 7a, 7b gebildet werden kann, ist in Figur 1c gut ersichtlich.

Weiterhin zeigt Figur 1c, dass die Hülse 4 in Axialrichtung A einendig einen umlaufenden Kragen 21 besitzt und anderendig eine umlaufende Anfasung 22 vorgesehen ist. Die Anfasung 22 kann in bequemer Art und Weise das Dämpfungselement 11, welches beispielsweise als offener Federring oder als geschlitzter Federring ausgebildet ist, auf die Hülse 4 geschoben werden und bis zum Axialanschlag, der durch den Kragen 21 gebildet wird, geschoben werden.

Die gesamte erfindungsgemäße Befestigungsvorrichtung 2 kann somit aus lediglich vier Einzelbauteilen (Hülse 4; zwei Überbrückungselemente 7a, 7b und einem einteiligen Dämpfungselement 11) gebildet werden, wobei sämtliche Bauteile in der Axialrichtung A fügbar sind. Auch das Einsetzen einer teilmontierten Unterbaugruppe aus einem der beiden Überbrückungselement 7a, 7b, der Hülse 4 und dem Dämpfungselement 11 kann in die Ausnehmung 3 des Abschirmteils 1 in Axialrichtung A gefügt werden. Somit gewährleistet die Erfindung zum einen eine Befestigungslösung für Abschirmteile 1 mit sehr wenigen Bauteilen, die zudem noch in einfacher Art und Weise und ohne die Gefahr von Verwechslungen montiert werden kann.

Figur 1d zeigt die erste Ausführungsform der erfindungsgemäßen Befestigungsvorrichtung 2 montiert in einem Abschirmteil 1 zur Bildung eines erfindungsgemäßen Abschirmteils 1 in einer Seitenansicht. Bei dieser Variante besitzen die Überbrückungselemente 7a, 7b die Schlitze 18 und die Federzungen 19.

Figur 1e zeigt ein abgewandeltes Beispiel der ersten Ausführungsform der erfindungsgemäßen Befestigungsvorrichtung 2 in dem montierten Zustand gemäß Figur 1d. Es wird deutlich, dass in diesem abgewandelten Beispiel (wie oben bereits vorbeschrieben) die Überbrückungselemente 7a, 7b die Schlitze 18 nicht aufweisen und als geschlossene napfartige Gebilde ausgebildet sind. Es entsteht somit eine vollständige Kapselung des Hohlraums 20 und somit ein guter Schmutz- und Verschleißschutz für die innenliegenden Bauteile.

Figur 1f zeigt beispielhaft die Anordnung des Befestigungsmittels 6, z. B. einer Schraube, mit der ein erfindungsgemäßes Abschirmteil 1 an einem Befestigungspartnerteil (nicht gezeigt) befestigbar ist. In dieser Ansicht wird besonders deutlich, dass die Ausnehmung 3 im Abschirmteil 1 durch die erfindungsgemäße Befestigungsvorrichtung 2 vollständig abgedeckt ist, so dass eine durchgängige lochfreie Gestaltung des Abschirmteils 1 möglich ist, so dass eine gute Wärmeabschirmung möglich ist, weil keine Öffnungen verbleiben, durch die Wärme, z. B. in Form von Strahlung, hindurchtreten kann.

Figur 1g zeigt ein weiteres abgewandeltes Beispiel der erfindungsgemäßen Befestigungsvorrichtung 2in einem erfindungsgemäßen Abschirmteil 1, wobei in dieser Ausführungsform die Federarme 12 wie bei den ersten Beispielen/Ausführungsformen die federnde Abstützung der Hülse 4 bezüglich des Lochrandes 3a bewerkstelligen. Der Federarmträgerring 13 weist radial innenseitig zusätzliche Federarme 12a auf, welche sich auf der Außenseite 15 der Hülse 4 abstützen. In diesem Fall ist also das Dämpfungselement 11 in Radialrichtung R ebenfalls federnd bezüglich der Hülse 4, insbesondere deren Außenseite 15 abgestützt. Das Dämpfungselement 11 ist sozusagen federnd schwimmend zwischen der Hülse 4 und dem Lochrand 3a der Ausnehmung 3 gehalten.

Außerdem sind in Lücken zwischen je zwei Federarmen 12 Rastnasen 25 vorgesehen, welche sich vom Federarmträgerring 13 radial nach außen erstrecken und in Axialrichtung sich tendenziell in die gleiche Richtung erstrecken, wie die Federarme 12.

Freie Enden 25a der Rastnasen 25 sind dabei derart angeordnet, dass diese freien Enden 25a in Radialrichtung R hinter eine Lochkante 26 der Ausnehmung 3 greifen können, wenn z. B. das Dämpfungselement 11 gemäß Figur 1g in der Axialrichtung A von unten nach oben (Ansicht gemäß Figur 1g) in die Öffnung 3 eingesetzt wird. Die freien Enden 25a sind dabei in der Lage hinter die Lochkante 26 zu schnappen und somit für eine provisorische Halterung eines Vormontagezustandes, beispielsweise aus dem Überbrückungselement 7a, der Hülse 4 und dem Dämpfungselement 11 bezüglich des Abschirmteils 1 zu sorgen, bis das zweite Überbrückungselement 7b in dessen radial inneren Bereich 10 durch den Umlagekragen 16 an der Hülse 4 befestigt ist.

Mit dieser Lösung gelingt somit eine in Axialrichtung A formschlüssige Halterung eines Zwischenmontagezustandes der erfindungsgemäßen Befestigungsvorrichtung 2 bezüglich der Ausnehmung 3 im Abschirmteil 1 bis zu einem Zeitpunkt, an dem das zweite Überbrückungselement 7b fest montiert ist. Bei einer fertig montierten Befestigungsvorrichtung 2 im Abschirmteil 1 haben die Rastnasen 25 keine Funktion mehr.

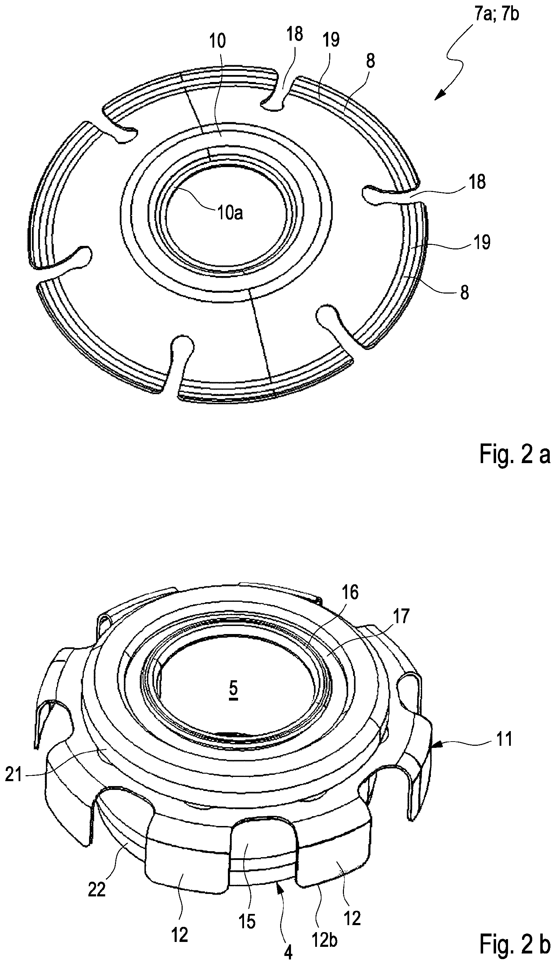

Figur 2a zeigt eine perspektivische Ansicht auf ein Überbrückungselement 7a, 7b in geschlitzter Ausführung mit den Schlitzen 18. Die Federzungen 19 bilden den radial äußeren Bereich 8 eines Überbrückungselements 7a, 7b. Der radial innere Bereich 10 ist zur Befestigung an einer Stirnseite der Hülse 4 ausgebildet und weist ein entsprechendes Randelement 10a auf, welches vom Umlagekragen 16 formschlüssig umfasst werden kann.

Figur 2b zeigt einen Zwischenmontagezustand einer Hülse 4 in der Ausführungsform gemäß Figur 2a mit der Anfasung 22. Die Hülse 4 trägt bereits das Dämpfungselement 11 mit der Vielzahl von Federarmen 12. Das Dämpfungselement 11 liegt in Axialrichtung A am umlaufenden Kragen 21 an. Selbstverständlich kann auch bei einer Hülse 4 gemäß der ersten Ausführungsform, das heißt bei einer Hülse 4 mit umlaufenden Kragen 21 und Anfasung 22 vorgesehen sein, ein Dämpfungselement 11 in der Ausführungsform gemäß dem abgewandelten Beispiel nach Figur 1g mit innenliegenden zusätzlichen Federarmen 12a zu verwenden. Auch kann ein derartiges abgewandeltes Dämpfungselement 11 gemäß Figur 1g auch lediglich die Federarme 12 (radial außen) und die zusätzlichen Federarme 12a (radial innen) besitzen und keine Rastnasen 25 aufweisen. Ein solches abgewandeltes Dämpfungselement 11 ist ebenfalls mit einer Hülse 4 in der Bauart gemäß dem ersten Ausführungsbeispiel (umlaufender Kragen 21 und Anfasung 22) wie auch in der zweiten Ausführungsform gemäß Figur 1g mit zwei umlaufenden Krägen 21 ohne Anfasung 22 verwendbar.

Gleichwohl kann auch eine Abwandlung dahingehend stattfinden, dass das Dämpfungselement 11 zwischen den Federarmen 12 die Rastnasen 25 besitzt aber keine radial innenliegenden zusätzlichen Federarme 12a aufweist.

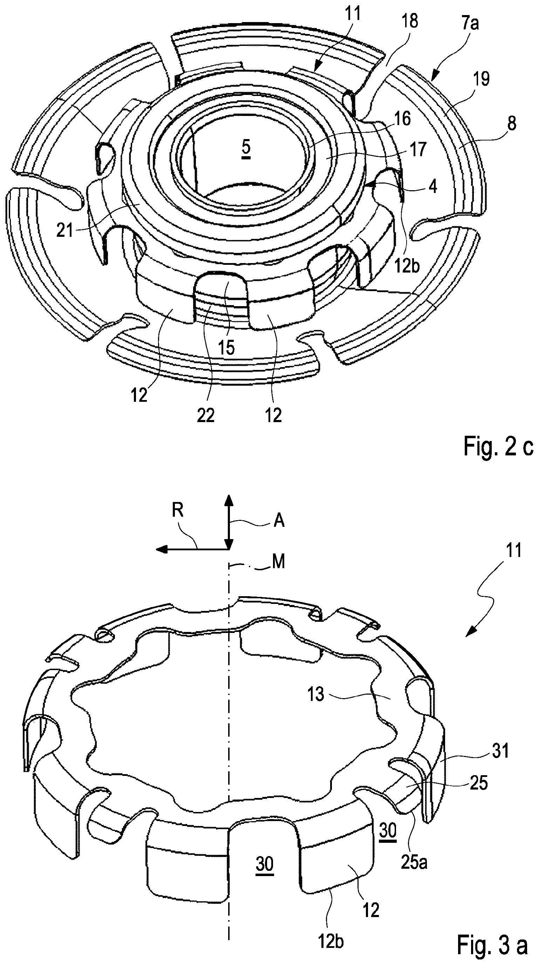

Figur 2c zeigt einen vormontierten Zwischenmontagezustand, bei dem eines der Überbrückungselemente 7a mit der Hülse 4 und dem Dämpfungselement 11 verbunden ist. Zweckmäßigerweise ist dasjenige Überbrückungselement 7a mit der Hülse 4 verbunden, welches den freien Enden 25a der Federarme 12 des Dämpfungselements 11 gegenüberliegt. Ein solcher Vormontageverbund, wie in Figur 2c gezeigt ist, wird dann in Axialrichtung A von der Außenseite 9a des Abschirmteils 1 gegenüberliegenden, in der Figur 1b nicht gezeigten Außenseite 9b her in die Ausnehmung 3 gefügt (vergl. hierzu auch Figur 1b).

Figur 3a zeigt eine weitere Ausführungsform des Dämpfungselements 11, bei dem am Federarmträgerring 13 die Vielzahl von Federarmen 12 angeordnet sind. In Lücken 30 zwischen zwei benachbarten Federarmen 12 kann eine Rastnase 25 vorgesehen sein, welche sich zunächst ausgehend vom Federarmträgerring 13 ein Stück in Radialrichtung R nach außen erstreckt. Die Rastnasen 25 sind im weiteren Verlauf gekrümmt ausgebildet und haben das freie Ende 25a, welches in Radialrichtung R über eine Außenseite 31 der Federarme 12 vorsteht und in der Lage ist, die Lochkante 26 (nicht gezeigt in Figur 3a) vergleiche Figur 1g zu überragen und somit die Lochkante 26 zu hintergreifen.

Die Rastnasen 25 sind über den Umfang verteilt angeordnet und im Ausführungsbeispiel gemäß Figur 3a sind vier Rastnasen 25 vorgesehen, wobei die Anzahl der Federarme 12 acht beträgt.

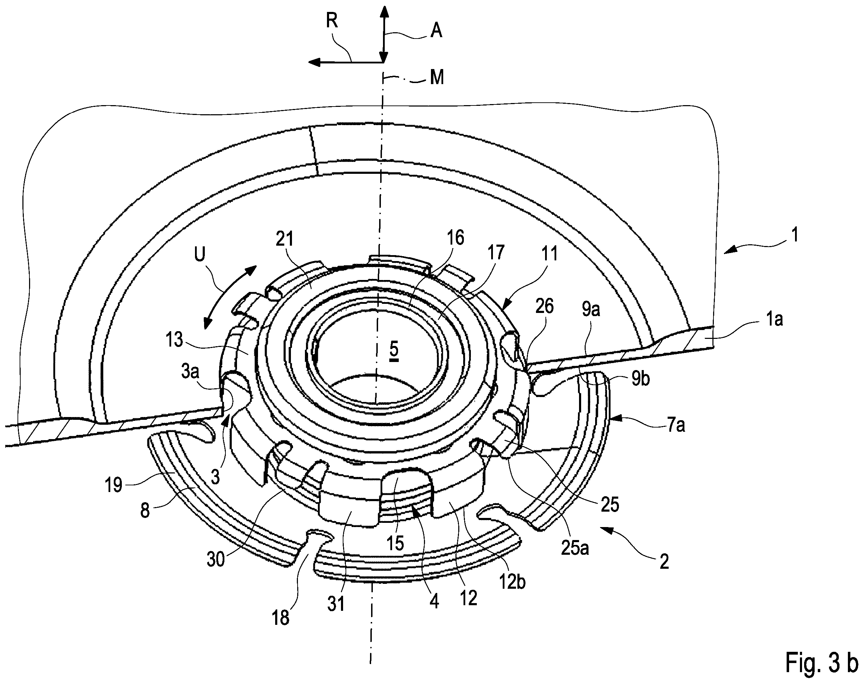

Figur 3b zeigt eine teilweise geschnittene Teilzusammenbausituation vergleichbar der Figur 1b für das erste Ausführungsbeispiel. Insbesondere wird deutlich, dass die Federarme 12 an der Lochkante 26 anliegen und die Rastnasen 25 die Lochkante 26 übergreifen. Eine derart vormontierte Zwischenbaugruppe bestehend aus einem Überbrückungselement 7a, der Hülse 4 und dem Dämpfungselement 11 kann in der Ansicht gemäß Figur 3b von der der Außenseite 9a gegenüberliegenden nicht sichtbaren Außenseite 9b her in die Ausnehmung 3 eingesteckt werden und dort mittels der Rastnasen 25 verrasten.

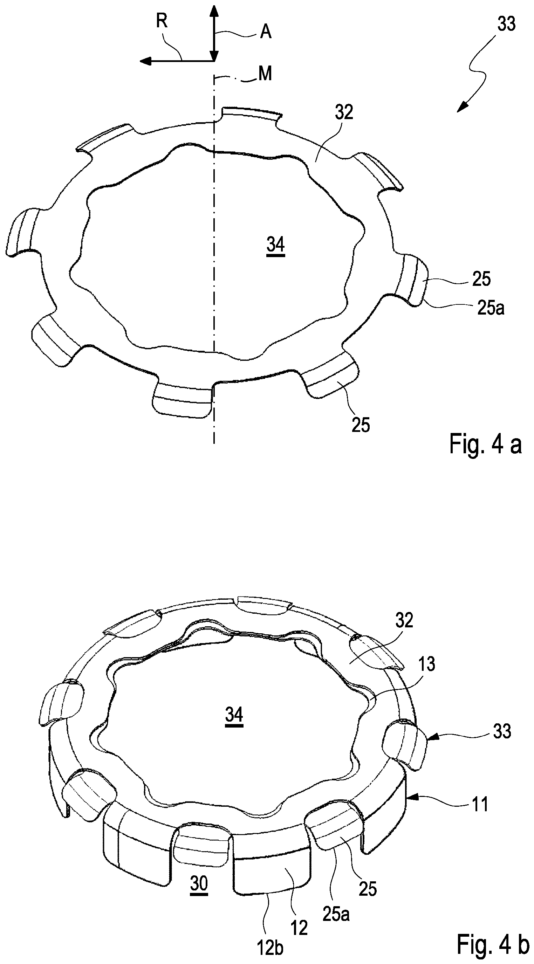

Figur 4a zeigt eine weitere Ausführungsform, bei der die Rastnasen 25 mittels eines Rastnasenträgerrings 32 gehalten sind und der Rastnasenträgerring 32 und die Rastnasen 25 einen Rastring 33 bilden. Der Rastring 33 weist eine Innenausnehmung 34 auf, welche derart eingerichtet und ausgebildet ist, dass der Rastring 33 über die Außenseite 15 der Hülse 4 gesteckt werden kann.

Figur 4b zeigt eine Kombination eines Dämpfungselements 11 der ersten Ausführungsform (vergl. Figur 1a) zusammen mit einem Rastring 33 gemäß der zuletzt beschriebenen Ausführungsform (vergl. Figur 4a).

Das Dämpfungselement 11 ist mit Federarmen 12 versehen. Der Rastnasenträgerring 32 ist dabei derart unter das Dämpfungselement 11 gesteckt, dass die Rastnasen 25 jeweils in Lücken 30 zwischen zwei Federarmen 12 zum Liegen kommen. Mit dieser Bauweise aus einem Dämpfungselement 11, welches lediglich Federarme 12 aufweist und einem Rastring 33, welcher lediglich Rastnasen 25 aufweist, kann ein Dämpfungselement 11 erzeugt werden, welches die Funktionalität des Dämpfungselements 11 der Figur 3b hat.

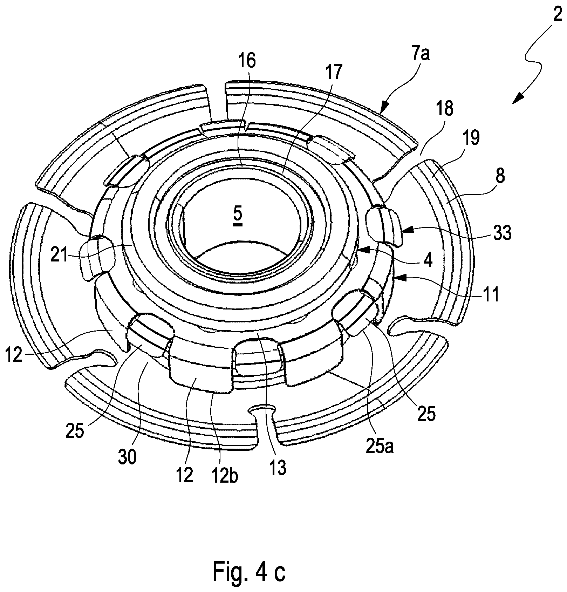

Einen Zwischenmontagezustand einer erfindungsgemäßen Befestigungsvorrichtung 2 mit einem Überbrückungselement 7a, 7b, der Hülse 4, dem Dämpfungselement 11 und einem Rastring 33 zeigt Figur 4c.

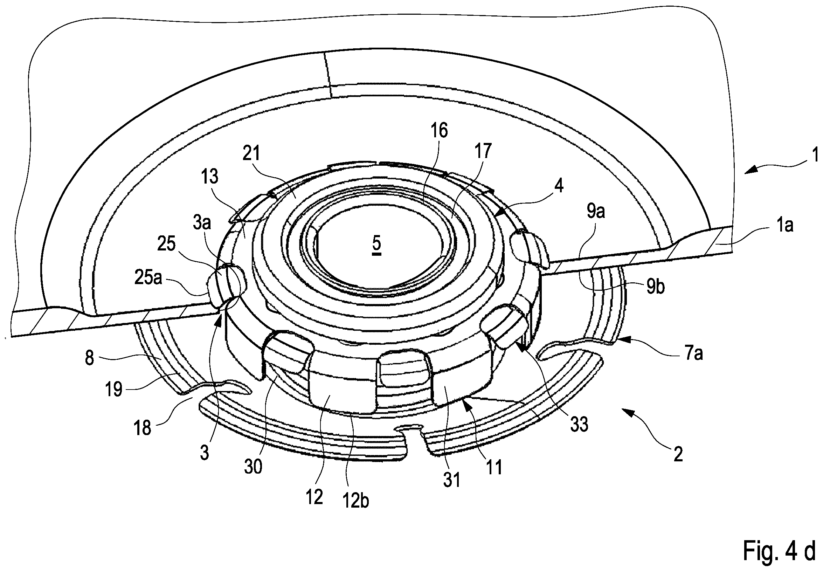

Figur 4d zeigt den Zwischenmontagezustand gemäß Figur 4c in einem eingerasteten Zustand in der Ausnehmung 3 des Abschirmteils 1, bevor das zweite Überbrückungselement 7b mit der Hülse 4 verbunden wird.

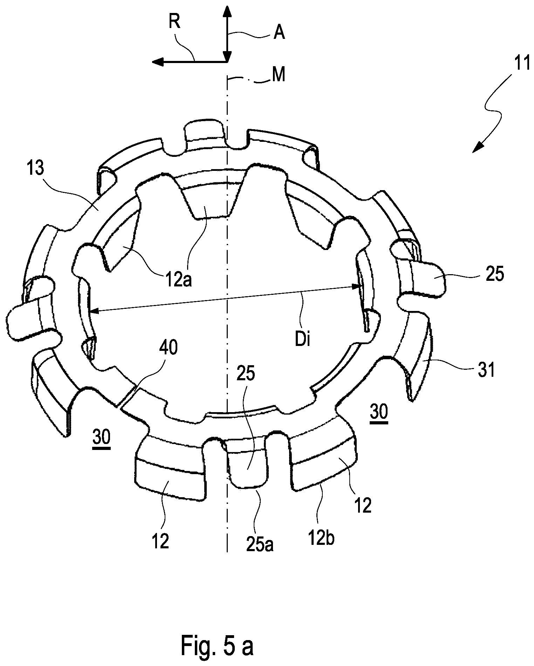

Figur 5a zeigt eine weitere Ausführungsform des Dämpfungselements 11, wie es bereits oben im Zusammenhang mit Figur 1g kurz beschrieben wurde.

Das Dämpfungselement 11 dieser Ausführungsform besitzt den Federarmträgerring 13. In Radialrichtung R nach außen gehen die Federarme 12 ab, welche sich mit ihrem freien Ende 25a in Axialrichtung A erstrecken.

In einigen der Lücken 30 zwischen zwei Federarmen 12 sitzen Rastnasen 25, deren freie Enden 12b zum Verrasten geeignet sind.

Radial gegenüberliegend zu den Lücken 30 gehen nach innen ebenfalls Federarme 12 ab, welche oben im Zusammenhang mit der Figur 1g als die zusätzlichen Federarme 12a bezeichnet wurden. Diese zusätzlichen Federarme 12a gehen zunächst vom Federarmträgerring 13 radial nach innen ab und erstrecken sich dann abgewinkelt in Axialrichtung A in die gleiche Richtung wie die Federarme 12.

Ein Innendurchmesser Dᵢ gebildet durch die zusätzlichen Federarme 12a entspricht dem Außendurchmesser der Hülse 4, insbesondere deren Außenseite 15, so dass ein Dämpfungselement 11 gemäß dieser Ausführungsform spielfrei oder federnd vorgespannt, bevorzugt federnd vorgespannt, auf der Hülse 4 angeordnet werden kann.

Zur erleichterten Montage eines solchen Dämpfungselements 11 ist dieses als geschlitztes Dämpfungselement 11 ausgebildet, bei der der Federarmträgerring 13 an einer Stelle des Umfanges einen z. B. radial durchgehenden Schlitz 40 aufweist. Mit einer derartigen Konstruktion kann das Dämpfungselement 11 - wie oben beschrieben - nach Art eines Kolbenringes um eine Hülse 4 herum montiert werden.

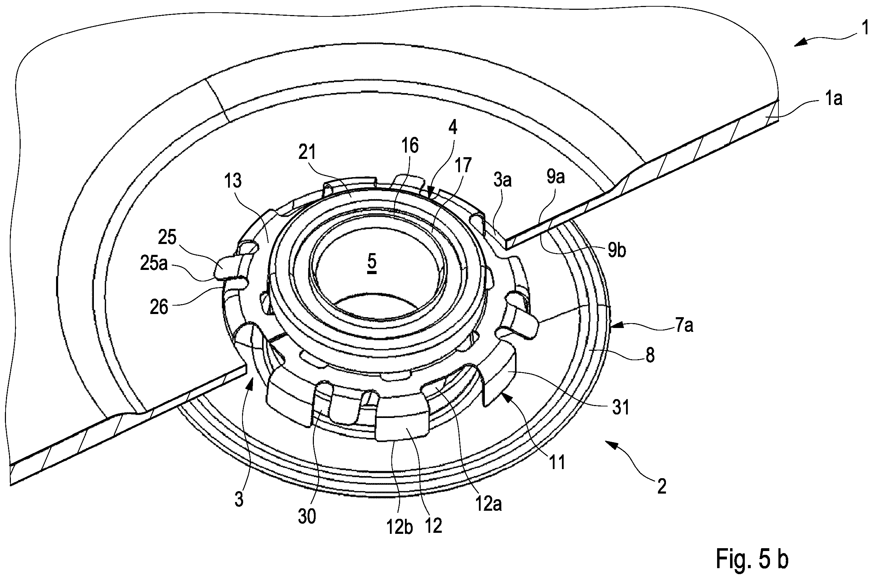

Figur 5b zeigt einen teilmontierten Zustand eines Vormontagezustandes einer erfindungsgemäßen Befestigungsvorrichtung 2 aufweisend das Dämpfungselement 11 in der Ausführungsform gemäß Figur 5a. In einer Vormontagestellung ist ein Vormontagemodul bestehend aus der Hülse 4, einem der beiden Überbrückungselemente 7a, 7b und dem Dämpfungselement 11 vormontiert und in die Ausnehmung 3 des Abschirmteils 1 rastend eingesetzt, so dass die Rastnasen 25 die Lochkante 26 hintergreifen und das vormontierte Modul gemäß Figur 5b formschlüssig einrastend in der Ausnehmung 3 halten.

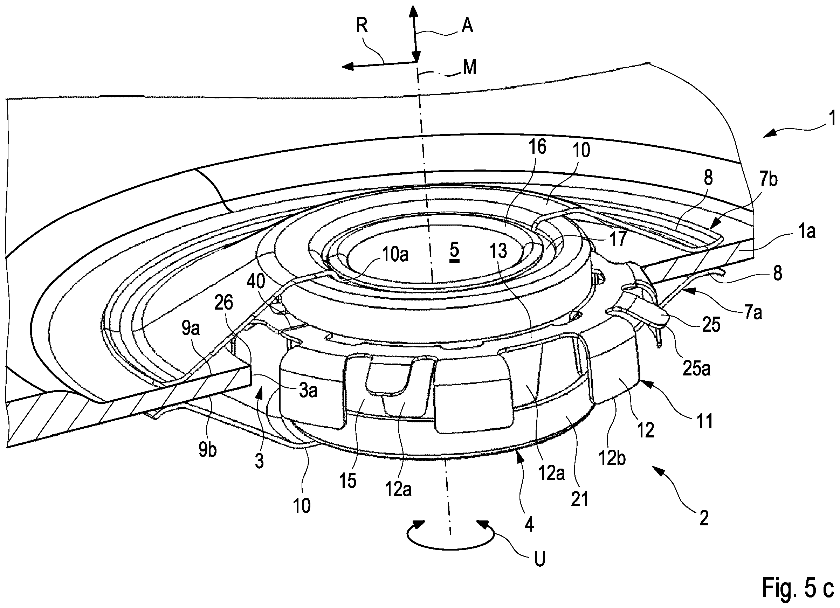

Figur 5c zeigt die Ausführungsform gemäß Figur 5a, 5b in einem teilgeschnittenen Zustand in einer Endmontagestellung mit dem aufgebrachten zweiten Überbrückungselement 7b, welches an der Stirnseite der Hülse 4 mittels des Umlagekragens 16 formschlüssig gehalten ist. Die Hülse 4 besitzt im Gegensatz zur Hülse 4 gemäß der ersten Ausführungsform in jedem axialen Endbereich der Außenseite 15 einen umlaufenden Kragen 21, so dass zwischen beiden umlaufenden Krägen 21 eine Nut gebildet ist, in die das Dämpfungselement 11 mit seinen zusätzlichen Federarmen 12a durch Aufsetzen des Dämpfungselements 11 auf die Hülse 4 in Axialrichtung A einrastend befestigt werden kann.

### Bezugszeichenliste

- 1: Abschirmteil
- 1a: flächiges Bauteil
- 2: Befestigungsvorrichtung
- 3: Ausnehmung
- 3a: Lochrand
- 4: Hülse
- 5: Durchgangsöffnung
- 6: Befestigungsmittel
- 7a, 7b: Überbrückungselemente
- 8: äußere Bereiche
- 9a, 9b: gegenüberliegende Außenseiten
- 10: radial innerer Bereich
- 10a: Randelement
- 11: Dämpfungselement
- 12: Federarm
- 12a: zusätzliche Federarme
- 12b: freie Enden
- 13: Federarmträgerring
- 14: Pfeil
- 14: Außenseite
- 16: Umlagekrägen
- 17: Ringnut
- 18: Schlitze
- 19: Federzungen
- 20: geschlossener Hohlraum
- 21: umlaufender Kragen
- 22: umlaufende Anfasung
- 25: Rastnasen
- 25a: freie Enden
- 26: Lochkante
- 30: Lücken
- 31: Außenseite
- 32: Rastnasenträgerring
- 33: Rastring
- 34: Innenausnehmung
- 40: Schlitz

- A: Axialrichtung
- Dᵢ: Innendurchmesser
- M: Mittellinie
- R: Radialrichtung
- U: Umfangsrichtung

## Patentansprüche

1. Befestigungsvorrichtung, insbesondere zum Befestigen eines Abschirmteils (1) an einem Befestigungspartnerteil aufweisend:
- eine Hülse (4) mit einer Durchgangsöffnung (5) für ein Befestigungsmittel (6);
- zumindest zwei Überbrückungselemente (7a, 7b), welche mit in einer Radialrichtung (R) äußeren Bereichen (8) zur mittelbaren oder unmittelbaren Anlage an gegenüberliegenden Außenseiten (9a, 9b) des Abschirmteils (1) eingerichtet und ausgebildet sind und mit in der Radialrichtung (R) inneren Bereichen (10) an der Hülse (4) befestigt sind;
- wobei in einer Axialrichtung (A) zwischen den Überbrückungselementen (7a, 7b) und in Radialrichtung (R) außerhalb der Hülse (4) ein Dämpfungselement (11) angeordnet ist,
**dadurch gekennzeichnet, dass**
- das Dämpfungselement (11) als Federelement (11) ausgebildet ist und mindestens einen Federarm (12) aufweist, der in der Radialrichtung (R) federnd nachgiebig ausgebildet ist und zum abstützenden Zusammenwirken mit einem Lochrand (3a) eines Loches des Abschirmteils (1) eingerichtet und ausgebildet ist.

2. Befestigungsvorrichtung nach Anspruch 1,
**dadurch gekennzeichnet, dass**
das Dämpfungselement (11) als Blechstanzbiegeteil mit in einer Umfangsrichtung (U) verteilt angeordneten Federarmen (12) ausgebildet ist.

3. Befestigungsvorrichtung nach Anspruch 1 oder 2,
**dadurch gekennzeichnet, dass**
das Dämpfungselement (11) in Radialrichtung (R) spielfrei, insbesondere radial vorgespannt auf der Hülse (4) sitzt.

4. Befestigungsvorrichtung nach einem der Ansprüche 1 bis 3,
**dadurch gekennzeichnet, dass**
das Dämpfungselement (11) in Radialrichtung (R) bezüglich der Hülse (4) starr oder federnd nachgiebig festgelegt ist.

5. Befestigungsvorrichtung nach einem der vorangegangenen Ansprüche,
**dadurch gekennzeichnet, dass**
das Dämpfungselement (11) als offener Federring ausgebildet ist, z. B. als geschlitzter Federring ausgebildet ist.

6. Befestigungsvorrichtung nach einem der vorangegangenen Ansprüche,
**dadurch gekennzeichnet, dass**
das Dämpfungselement (11) mindestens zwei Rastnasen (25) besitzt, welche dazu eingerichtet und ausgebildet sind, nach der Montage im Abschirmteil (1) in Montagerichtung hinter einer Lochkante (26) zu verhaken.

7. Befestigungsvorrichtung nach einem der vorangegangenen Ansprüche,
**dadurch gekennzeichnet, dass**
die Rastnasen (25) in Umfangsrichtung (U)jeweils in einem Zwischenraum zwischen Federarmen (12) angeordnet sind.

8. Befestigungsvorrichtung nach einem der vorangegangenen Ansprüche,
**dadurch gekennzeichnet, dass**
die Federarme (12) auf einem Federarmträgerring (13) des Dämpfungselements (11) und die Rastnasen (25) auf einem separaten Rastnasenträgerring (32) eines Rastelements angeordnet sind.

9. Befestigungsvorrichtung nach einem der vorangegangenen Ansprüche,
**dadurch gekennzeichnet, dass**
Federarme (12a) vorhanden sind, die vom Federarmträgerring (13) abgehen und zur radial inneren Abstützung des Federelements (11) relativ zur Hülse (4) vorgesehen sind.

10. Befestigungsvorrichtung nach einem der vorangegangenen Ansprüche,
**dadurch gekennzeichnet, dass**
der Federarmträgerring (13) in einer Nut der Hülse (4) sitzt.

11. Befestigungsvorrichtung nach einem der vorangegangenen Ansprüche,
**dadurch gekennzeichnet, dass**
die Überbrückungselemente (7a, 7b) jeweils auf axialen Stirnseiten der Hülse (4) an der Hülse (4) befestigt sind.

12. Befestigungsvorrichtung nach einem der vorangegangenen Ansprüche,
**dadurch gekennzeichnet, dass**
die Überbrückungselemente (7a, 7b) scheibenartige, insbesondere im Querschnitt napfartige Körper sind, die im zusammengebauten Zustand zusammen mit dem Abschirmteil (1) und der Hülse (4) einen geschlossenen Ringholraum bilden, in dem das Federelement (11) sitzt.

13. Befestigungsvorrichtung nach einem der vorangegangenen Ansprüche,
**dadurch gekennzeichnet, dass**
die Hülse (4) axial stirnseitig jeweils einen Umlagekragen (16) besitzt, mit dem die Überbrückungselemente (7a, 7b) mit einer Betätigungsrichtung eines Börtelwerkzeuges/Nietwerkzeuges in Axialrichtung (A) ausgerichtet ist in einem Arbeitsgangs befestigbar sind.

14. Abschirmteil aufweisend mindestens eine Befestigungsvorrichtung (2) nach einem der Ansprüche 1 bis 13.

## Claims

1. A fastening device, in particular for fastening a shielding part (1) to a partnered fastening part, having:
- a sleeve (4) with a through opening (5) for a fastener (6);
- at least two bridging elements (7a, 7b), which are equipped and embodied with outer regions (8) in a radial direction (R) for indirect or direct contact with the opposing outsides (9a, 9b) of the shielding part (1) and are fastened to the sleeve (4) with inner regions (10) in the radial direction (R);
- a damping element (11) is positioned between the bridging elements (7a, 7b) in an axial direction (A) and outside of the sleeve (4) in the radial direction (R),
**characterized in that**
- the damping element (11) is embodied as a spring element (11) and has at least one spring arm (12), which is embodied as resiliently flexible in the radial direction (R) and is equipped and embodied to cooperate in a supporting way with a hole rim (3a) of a hole of the shielding part (1).

2. The fastening device according to claim 1,
**characterized in that**
the damping element (11) is embodied as a stamped and bent sheet metal part with spring arms (12) arranged in distributed fashion in a circumference direction (U).

3. The fastening device according to claim 1 or 2,
**characterized in that**
the damping element (11) rests against the sleeve (4) without play in the radial direction (R), particularly in a radially prestressed way.

4. The fastening device according to one of claims 1 through 3,
**characterized in that**
the damping element (11) is affixed relative to the sleeve (4) in the radial direction (R) in a rigid or resiliently flexible way.

5. The fastening device according to one of the preceding claims,
**characterized in that**
the damping element (11) is embodied as an open spring washer, e.g. a split spring washer.

6. The fastening device according to one of the preceding claims,
**characterized in that**
the damping element (11) has at least two detent projections (25) that are equipped and embodied to catch behind a hole edge (26) after being mounted in the shielding part (1) in the mounting direction.

7. The fastening device according to one of the preceding claims,
**characterized in that**
the detent projections (25) are positioned in the circumference direction (U) in a respective space between the spring arms (12).

8. The fastening device according to one of the preceding claims,
**characterized in that**
the spring arms (12) are positioned on a spring arm support ring (13) of the damping element (11) and the detent projections (25) are positioned on a separate detent projection support ring (32) of a detent element.

9. The fastening device according to one of the preceding claims,
**characterized in that**
spring arms (12a) are present, which extend out from the spring arm support ring (13) and are provided for the radially inner support of the spring element (11) relative to the sleeve (4).

10. The fastening device according to one of the preceding claims,
**characterized in that**
the spring arm support ring (13) rests in a groove in the sleeve (4).

11. The fastening device according to one of the preceding claims,
**characterized in that**
the bridging elements (7a, 7b) are each fastened to the sleeve (4) at the axial end surfaces of the sleeve (4).

12. The fastening device according to one of the preceding claims,
**characterized in that**
the bridging elements (7a, 7b) are disk-like, in particular cross-sectionally cup-shaped bodies, which, in the assembled state, cooperate with the shielding part (1) and the sleeve (4) to form a closed annular cavity in which the spring element (11) rests.

13. The fastening device according to one of the preceding claims,
**characterized in that**
the sleeve (4) has a flanging collar (16) at each of its axial end surfaces, to which the bridging elements (7a, 7b) can be fastened in one work step with an actuating direction of a crimping tool/riveting tool is oriented in an axial direction (A).

14. A shielding part having at least one fastening device (2) according to one of claims 1 through 13.

## Revendications

1. Dispositif de fixation, en particulier pour fixer une pièce de protection (1) à une partie de fixation complémentaire, comportant
- un manchon (4) avec une ouverture traversante (5) pour un moyen de fixation (6) ;
- au moins deux éléments de pontage (7a, 7b) qui sont conçus et réalisés avec des zones (8) extérieures dans une direction radiale (R) pour l'appui direct ou indirect contre des faces extérieures opposées (9a, 9b) de la pièce de protection (1) et qui sont fixés au manchon (4) avec des zones (10) intérieures dans la direction radiale (R) ;
- un élément d'amortissement (11) étant disposé dans une direction axiale (A) entre les éléments de pontage (7a, 7b) et dans la direction radiale (R) à l'extérieur du manchon (4), **caractérisé en ce que**
- l'élément d'amortissement (11) est réalisé sous forme d'élément formant ressort (11) et comprend au moins un bras élastique (12) qui est réalisé de manière à céder élastiquement dans la direction radiale (R) et qui est conçu et réalisé pour la coopération de soutien avec un bord (3a) d'un trou de la pièce de protection (1).

2. Dispositif de fixation selon la revendication 1,
**caractérisé en ce que**
l'élément d'amortissement (11) est réalisé sous forme de pièce de tôle découpée et pliée avec des bras élastiques (12) disposés en étant répartis dans une direction circonférentielle (U).

3. Dispositif de fixation selon la revendication 1 ou 2,
**caractérisé en ce que**
l'élément d'amortissement (11) est logé sur le manchon (4) sans jeu dans la direction radiale (R), en particulier en étant précontraint radialement.

4. Dispositif de fixation selon l'une des revendications 1 à 3,
**caractérisé en ce que**
l'élément d'amortissement (11) est immobilisé de manière rigide ou de manière à céder élastiquement dans la direction radiale (R) par rapport au manchon (4).

5. Dispositif de fixation selon l'une des revendications précédentes,
**caractérisé en ce que**
l'élément d'amortissement (11) est réalisé sous forme de bague élastique ouverte, par exemple sous forme de bague élastique fendue.

6. Dispositif de fixation selon l'une des revendications précédentes,
**caractérisé en ce que**
l'élément d'amortissement (11) présente au moins deux becs d'enclenchement (25) qui sont conçus et réalisés pour s'accrocher derrière un rebord perforé (26) dans la direction de montage, après le montage dans la pièce de protection (1).

7. Dispositif de fixation selon l'une des revendications précédentes,
**caractérisé en ce que**
les becs d'enclenchement (25) sont disposés dans la direction circonférentielle (U) dans un interstice respectif entre les bras élastiques (12).

8. Dispositif de fixation selon l'une des revendications précédentes,
**caractérisé en ce que**
les bras élastiques (12) sont disposés sur une bague de support de bras élastique (13) de l'élément d'amortissement (11), et les becs d'enclenchement (25) sont disposés sur une bague de support de bec d'enclenchement séparée (32) d'un élément d'enclenchement.

9. Dispositif de fixation selon l'une des revendications précédentes,
**caractérisé en ce que**
il est prévu des bras élastiques (12a) qui s'étendent à partir de la bague de support de bras élastique (13) et qui sont prévus pour le soutien radialement intérieur de l'élément formant ressort (11) par rapport au manchon (4).

10. Dispositif de fixation selon l'une des revendications précédentes,
**caractérisé en ce que**
la bague de support de bras élastique (13) est logée dans une rainure du manchon (4).

11. Dispositif de fixation selon l'une des revendications précédentes,
**caractérisé en ce que**
les éléments de pontage (7a, 7b) sont chacun fixés au manchon (4) sur les faces frontales axiales du manchon (4).

12. Dispositif de fixation selon l'une des revendications précédentes,
**caractérisé en ce que**
les éléments de pontage (7a, 7b) sont des corps en forme de disque, en particulier avec une section transversale en forme de godet, qui, à l'état assemblé, forment ensemble avec la pièce de protection (1) et avec le manchon (4) un espace creux annulaire fermé dans lequel est logé l'élément formant ressort (11).

13. Dispositif de fixation selon l'une des revendications précédentes,
**caractérisé en ce que**
le manchon (4) présente sur la face frontale axiale une collerette rabattue (16) respective, au moyen de laquelle les éléments de pontage (7a, 7b) peuvent être fixés en une seule passe de travail avec une direction d'actionnement d'un outil de bridage / d'un outil de rivetage orientée dans la direction axiale (A).

14. Pièce de protection comprenant au moins un dispositif de fixation (2) selon l'une des revendications 1 à 13.
